Europäisches Patentamt

European Patent Office

Office européen des brevets

(11) Veröffentlichungsnummer: **0 020 939**
A1

# EUROPÄISCHE PATENTANMELDUNG

(21) Anmeldenummer: 80102306.0

(22) Anmeldetag: 29.04.80

(51) Int. Cl.³: **G 01 C 21/14**, G 06 F 15/50

(30) Priorität: 26.06.79 DE 2925656

(43) Veröffentlichungstag der Anmeldung: 07.01.81
Patentblatt 81/1

(84) Benannte Vertragsstaaten: **FR GB IT**

(71) Anmelder: **Blaupunkt-Werke GmbH,**
**Robert-Bosch-Strasse 200, D-3200 Hildesheim (DE)**

(72) Erfinder: **Pilsak, Otmar, Dr., Gneisenaustrasse 7,**
**D-3200 Hildesheim (DE)**

(74) Vertreter: **Ellers, Norbert, Dipl.-Phys.,**
**Robert-Bosch-Strasse 200, D-3200 Hildesheim (DE)**

(54) Verfahren und Vorrichtung zur Zielführung von Landfahrzeugen.

(57) Es wird ein Verfahren und eine Vorrichtung zur Zielführung von Landfahrzeugen, insbesondere zur Anwendung in stark vermaschten Stadtstrassennetzen, vorgeschlagen. Dabei wird ein Fahrzeuggerät mit einer Eingabeeinrichtung (2) für einen Zielwunsch und einer Ausgabeeinrichtung für Fahranweisungen (3) verwendet.

Das Fahrzeuggerät weist erfindungsgemäss weiterhin einen Geber für Bewegungsdaten (4), einen Speicher (6) und einen zentralen, programmgesteuerten Auswerteblock (1) auf. Im Speicher sind die Lage der Anfangs- und Endpunkte aller zulässigen Fahrrouten und jeweils ein Verbindungsweg zwischen einem Anfangs- und einem Endpunkt abgespeichert. Weiterhin werden im Fahrzeuggerät Entfernungen und Richtungen registriert, so dass mit den vorhandenen Daten eine optimale Fahrroute ermittelt werden kann.

ACTORUM AG

# BLAUPUNKT-WERKE GMBH 32 HILDESHEIM, Robert-Bosch-Straße 200

PLI Schneider-md/texl      - 1 -      25. Juni 1979
                                                R.Nr. 1623

Die Erfindung betrifft ein Verfahren zur Zielführung von Fahrzeugen auf dem Lande, insbesondere zur Anwendung in stark vermaschten Straßennetzen sowie eine Vorrichtung zur Durchführung
des Verfahrens gemäß den in den Oberbegriffen der Patentansprüche 1 und 9 enthaltenen Merkmalen.

Aus Japan sind Vorschläge für ein Streckenleitsystem bekannt
geworden ("Markt und Technik", vom 15. September 1978,
Seiten 41 bis 42), bei dem ein Fahrer auf der optimalen Strecke
zu seinem Ziel geführt wird. Dabei soll das System die aktuelle
Gesamtverkehrslage berücksichtigen. In ersten Versuchen ist
dieses System im Stadtgebiet von Tokio erprobt worden.

Ein Informationsaustausch erfolgt bei diesem bekannten System
über Antennenschleifen und eine Straßensteuerungseinheit
zwischen einem Fahrzeuggerät und einem Zentralcomputer. Eine
Datenverarbeitungsanlage mit dem Zentralcomputer umfaßt bei
dem bekannten System als weitere Informationsquellen einen
Kommunikationsrechner, einen Steuer-, einen Verkehrsrechner
und zwei Streckensuchrechner zur Wegoptimierung, insgesamt
also sechs Computer. Ferner wird bei dem System eine große
Anzahl von aufwendigen Straßensteuerungseinheiten benötigt.

Ein weiterer Nachteil des Systems liegt darin begründet, daß
die Informationen zur Verkehrslage außerhalb des Fahrzeugs
ausgewertet und die Fahranweisungen von außen an einen Fahrer
geleitet werden, so daß bei äußeren Störeinflüssen und bei
einem Verlassen der mit systemgerechten Straßengeräten ausgebauten Strecke eine Zielführung eines Fahrzeugs nicht mehr
möglich ist.

**BLAUPUNKT-WERKE GMBH** 32 HILDESHEIM, Robert-Bosch-Straße 200

PLI Schneider-md/tex1          - 2 -          25. Juni 1979
                                              R.Nr. 1623


Der Erfindung liegt die Aufgabe zugrunde, ein Verfahren und
eine Vorrichtung zur Zielführung von Fahrzeugen unter Verwendung eines im wesentlichen fahrzeugautonomen Systems zu
schaffen, so daß die geschilderten Nachteile des bekannten
Systems nicht mehr auftreten.

Diese Aufgabe wird erfindungsgemäß durch ein Verfahren und eine
Vorrichtung gemäß den kennzeichnenden Merkmalen der Patentansprüche 1 und 9 gelöst.

Das erfindungsgemäße Verfahren bietet den Vorteil, daß das ihm
zugrundeliegende System auch dann noch funktioniert, wenn eine
vorgeschriebene Fahrroute einmal verlassen wird und man sich
auf eine Straße begibt, die nicht mit systemeigenen Komponenten
ausgerüstet ist.

Ferner ist das System entsprechend den Anforderungen am Einsatzort in der Weise variierbar, daß zwischen einem reinen, fahrzeugautonomen Navigationssystem und einer Kombination eines solchen
Navigationssystems mit einer Vielzahl von fahrzeugexternen
Stützpunkten alle Zwischenlösungen realisierbar sind.

Da die Vorrichtung außer in Gebieten mit geringen Abmessungen
vor allem auch für Großstädte vorgesehen ist und da sich aufgrund vielfältiger Einflüsse der Fehler zwischen einer vom
Navigationssystem ermittelten Position und der tatsächlichen
Position des Fahrzeugs mit der zurückgelegten Entfernung vergrößert, sind in größeren Anwendungsgebieten externe Stützpunkte vorgesehen, die beim Passieren eines Fahrzeugs Daten
über ihre Lage in das Fahrzeug übermitteln, so daß die im
Fahrzeug vom Navigationssystem ermittelte Position automatisch
auf diese exakte Position korrigiert werden kann.

# BLAUPUNKT-WERKE GMBH 32 HILDESHEIM, Robert-Bosch-Straße 200

PLI Schneider-md/tex1                    - 3 -                        25. Juni 1979
                                                                     R.Nr. 1623

Weiterhin ist es in vorteilhafter Weise möglich, die erfindungsgemäße Vorrichtung ohne erheblichen Mehraufwand dahingehend auszubauen, daß sie zum Zweck der Fahrzeugdisposition
bei Sonderfahrzeugen (Polizei, Feuerwehr, Notarzt) von diesen
zugeordneten Zentralen aus verwendet werden kann.

Die erfindungsgemäße Vorrichtung bietet außerdem den Vorteil,
daß es mit ihr ohne wesentlichen Mehraufwand möglich ist,
Daten über die Verkehrslage sowie andere aktuelle Daten
(Wettervorhersagen, Notrufe) von einer Zentrale über die
Stützpunkte an die Fahrzeuge zu übermitteln.

Andere bevorzugte Weiterbildungen der Erfindung sind in den
Unteransprüchen enthalten.

Ein vorteilhaftes Ausführungsbeispiel der Erfindung ist in der
Zeichnung dargestellt und wird nachfolgend näher beschrieben.

Es zeigt

    Fig. 1     ein Blockschaltbild eines Fahrzeuggeräts im
               Rahmen der erfindungsgemäßen Vorrichtung,

    Fig. 2     eine schematische Darstellung eines Fahrzeugs
               unter einem Stützpunkt.

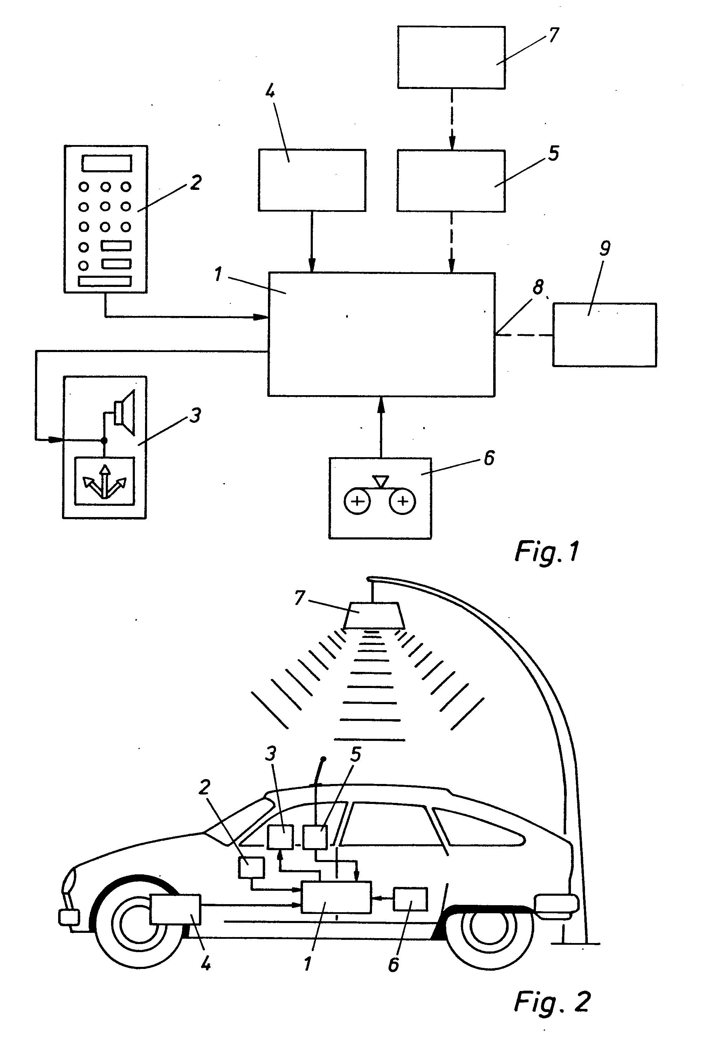

Gemäß Fig. 1 besteht das Fahrzeuggerät einer erfindungsgemäßen
Vorrichtung aus einem zentralen, programmgesteuerten Auswerteblock 1, der über eine Datenleitung mit einer Eingabeeinrichtung 2 für einen Zielwunsch und einer Ausgabeeinrichtung 3
für Fahranweisungen verbunden ist. Die Ausgabeeinrichtung 3

# BLAUPUNKT-WERKE GMBH 32 HILDESHEIM, Robert-Bosch-Straße 200

PLI Schneider-md/texl          - 4 -                    25. Juni 1979
                                                        R.Nr. 1623


für Fahranweisungen ist im vorliegenden Ausführungsbeispiel
für optische und akustische Fahranweisungen ausgelegt.

In einem Geber 4 für Bewegungsdaten werden Meßdaten über eine
zurückgelegte Entfernung und Richtungsdaten erzeugt und einem
Navigationssystem im Auswerteblock 1 zugeführt, wo die augenblickliche Position eines Fahrzeugs ermittelt wird.

In einem Speicher 6 sind alle zur Routenfindung wesentlichen
Daten eines Geländeplans, im vorliegenden Ausführungsbeispiel
eines Stadtplans, gespeichert. Zu diesen Stadtplandaten gehören z. B. Angaben über die Straßenführung, vor allem Daten
zur Lage der Straßenkreuzungen und -einmündungen, die als sogenannte Entscheidungspunkte des Systems fungieren. Gemäß
einer vorteilhaften Weiterbildung sind Angaben über die Straßenkategorie und die zulässige Fahrrichtung von Einbahnstraßen
ebenfalls abgespeichert. Bei einer Verfeinerung des Systems
kann die Abspeicherung von Parkmöglichkeiten, wichtigen Gebäuden und weiteren Angaben vorgesehen sein.

In Fig. 2 liegt eine schematische Darstellung eines Fahrzeugs
unter einem als Stützpunkt 7 verwendeten Mikrowellensender
vor. Im vorliegenden Ausführungsbeispiel werden als Stützpunkte
7 über Straßenkreuzungen und -einmündungen (d.h. über sogenannten
Entscheidungspunkten) in geeigneter Dichte aufgehängte Mikrowellensender verwendet, die laufend, also auch beim Passieren
eines Fahrzeugs, Positionsdaten, z. B. der Entscheidungspunkte,
senden.

# BLAUPUNKT-WERKE GMBH 32 HILDESHEIM, Robert-Bosch-Straße 200

Ein zugehöriger Empfänger 5 befindet sich an geeigneter Stelle im Fahrzeug und ist über eine Datenleitung mit dem Auswerteblock 1 verbunden. Im Auswerteblock 1 wird in einer Vergleichseinrichtung die vom Navigationssystem ermittelte Ist-Position des Fahrzeugs auf die von einem Stützpunkt 7 empfangene exakte Position korrigiert. Dadurch werden zwischenzeitlich in der Meßvorrichtung des Fahrzeugs aufgetretene Meßfehler an jedem Stützpunkt, an dem das Fahrzeug vorbeifährt, eliminiert.

Durch die Wahl einer Mikrowellenübertragung wird der Vorteil einer ortsselektiven Signalübertragung erreicht. Alternativ kommen für die Übertragung der Stützpunktdaten in der Straße verlegte Induktionsschleifen oder optische Sender und jeweils geeignete Fahrzeugempfänger zur Anwendung.

Zusätzlich zu den bereits beschriebenen Angaben können im Speicher 6 die Koordinaten der Stützpunkte abgespeichert sein. Zur Speicherung kommen aufgrund der Vielzahl von abzuspeichernden Daten vor allem Speicher mit hoher Speicherkapazität, z. B. Bubble-Speicher, Magnetcassetten oder CCD-Speicher zur Anwendung. Die gespeicherten Daten können über eine Datenleitung vom Speicher 6 zum zentralen, programmgesteuerten Auswerteblock 1 abgerufen werden.

Nachfolgend soll die Wirkungsweise der Vorrichtung beschrieben werden. Vor Fahrtantritt tippt der Fahrer seinen Zielwunsch in Form einer Zieladresse in die Zieleingabe-Einrichtung 2 ein. Derartige Zieleingabe-Einrichtungen sind von einem von der Anmelderin entwickelten und zwischenzeitlich öffentlich erprobten Autofahrer-Leit- und Informationssystem bekannt. Im vorliegenden Ausführungsbeispiel enthält eine Zieladresse Angaben über

# BLAUPUNKT-WERKE GMBH 32 HILDESHEIM, Robert-Bosch-Straße 200

PLI Schneider-md/texl          - 6 -          25. Juni 1979
                                              R.Nr. 1623


die Lage des Ausgangspunktes und des Zielpunktes sowie über
die Fahrtrichtung.

Aufgrund der eingegebenen Zieladresse und den vom Navigationssystem ermittelten Angaben über den Ausgangspunkt bzw. der abgespeicherten Lage des Ausgangspunkts des Fahrzeugs wird im
zentralen, programmgesteuerten Auswerteblock 1 mit Hilfe eines
Routensuchalgorithmus die dem Fahrer zu empfehlende Fahrroute
errechnet, und es werden an die Ausgabeeinrichtung 3 Fahranweisungen geleitet, die dem Fahrer exakt die einzuschlagende
Fahrroute vorschreiben. Diese Fahranweisungen werden vor jedem
Entscheidungspunkt, also vor jeder in Frage kommenden Kreuzung
oder Einmündung, auf der Ausgabeeinrichtung 3 zur Anzeige gebracht.

Bei Auftreten eines Hindernisses, z. B. einer plötzlichen
Straßensperrung auf der vom Fahrzeuggerät ermittelten und vom
Fahrer eingeschlagenen Fahrroute, kann der Fahrer selbständig
eine andere Richtung einschlagen, z. B. statt "geradeaus" die
Richtung "rechts" oder "links". Das Navigationssystem registriert
dann die Abweichung von der bisher empfohlenen Fahrroute und
im Auswerteteil 1 wird mittels eines Routensuchalogrithmus
spätestens bis zum Erreichen des nächsten Entscheidungspunktes
eine neue Fahrroute errechnet. Es werden dann in der Folgezeit
Fahranweisungen für diese neue Route angezeigt.

Da von dem Augenblick an, von dem das Fahrzeug in Bewegung gesetzt wird, der Geber 4 für Bewegungsdaten Meßwerte für eine
zurückgelegte Entfernung und Werte zur Winkelbestimmung liefert,
kennt das System mit Hilfe des im Auswerteblock 1 vorhandenen
Navigationsalgorithmus zu jedem Zeitpunkt den genauen Standpunkt des Fahrzeugs. Da weiterhin alle in Frage kommenden Ziel-

# BLAUPUNKT-WERKE GMBH 32 HILDESHEIM, Robert-Bosch-Straße 200

PLI Schneider-md/tex1          - 7 -                    25. Juni 1979
                                                       R.Nr. 1623

punkte und die jeweiligen Verbindungsrouten eines Stadtplans
im Speicher 6 abgespeichert sind, existiert innerhalb der
Fehlergrenzen eine genaue Zuordnung des vom Navigationssystem
ermittelten augenblicklichen Standpunktes des Fahrzeugs zum
Standpunkt auf dem abgespeicherten Stadtplan, so daß in definiertem Abstand vor jedem Entscheidungspunkt, also vor einer
Kreuzung oder einer Einmündung, die erforderliche Fahranweisung
gegeben wird.

Der bei der vom Navigationssystem ermittelten Position auftretende Fehler resultiert u.a. aus einer ungenauen Entfernungsmessung und einer ungenauen Winkelmessung bei Überholvorgängen,
Bremsvorgängen usw., da die entsprechenden Meßdaten im vorliegenden Ausführungsbeispiel von den Rädern des Fahrzeugs abgegriffen werden. Dieser bei den derzeitig auf dem Markt erhältlichen Meßsystemen für Fahrzeuge unvermeidliche Fehler begründet die Zweckmäßigkeit des Einsatzes von externen Stützpunkten
bei Anwendung des vorliegenden Zielführungsverfahrens in ausgedehnten Großstadtgebieten.

Das Anwendungsgebiet des Verfahrens und der Vorrichtung kann ohne
wesentlichen Mehraufwand bei Sonderfahrzeugen (Polizei, Feuerwehr, Notarzt) zum Zweck der Fahrzeugdisposition von den Sonderfahrzeugen zugeordneten Zentralen aus erweitert werden. Dazu
ist gemäß Figur 1 am Auswerteblock 1 ein separater Ausgang 8
vorgesehen, an dem ein Signal über die augenblickliche Position
des Fahrzeugs abgreifbar ist. Dieses Signal wird der üblichen
Sendeanlage 9 des Sonderfahrzeugs zugeführt, und von dort wird
die Positionsnachricht automatisch an die überwachende Zentrale
gesendet.

# BLAUPUNKT-WERKE GMBH 32 HILDESHEIM, Robert-Bosch-Straße 200

PLI Schneider-md/tex1      - 8 -      25. Juni 1979
R.Nr. 1623

Weiterhin kann das Anwendungsgebiet des Verfahrens und der
Vorrichtung dahingehend erweitert bzw. mit bekannten Komponenten kombiniert werden, daß die einzelnen Stützpunkte über
einen Signalweg mit einer Verkehrszentrale verbunden sind. Dadurch ist es ohne Schwierigkeiten möglich, aktuelle Verkehrsmeldungen aus dem lokalen Bereich sowie aktuelle Meldungen
anderer Art, z. B. Notrufe, Wetterdurchsagen, über die Stützpunkte in die Fahrzeuge zu senden.

# BLAUPUNKT-WERKE GMBH 32 HILDESHEIM, Robert-Bosch-Straße 200

PLI Schneider-md/texl                    25. Juni 1979
                                         R.Nr. 1623

## Patentansprüche

1. Verfahren zur Zielführung von Fahrzeugen auf dem Lande, insbesondere zur Anwendung in stark vermaschten Stadtstraßennetzen, bei dem einem Fahrzeuggerät ein Zielwunsch eingegeben wird und bei dem vor jedem Entscheidungspunkt über eine Ausgabeeinrichtung Fahranweisungen an den Fahrer gegeben werden, dadurch gekennzeichnet, daß in einem Speicher (6) des Fahrzeuggerätes die Lage der Anfangs- und Endpunkte aller zulässigen Fahrrouten abgespeichert wird, daß jeweils ein Verbindungsweg zwischen einem Anfangspunkt und einem Endpunkt abgespeichert wird, daß die durchfahrene Entfernung und Richtung im Fahrzeug registriert wird, und zwar durch ein im Fahrzeug installiertes Navigationssystem oder durch Kombination des Navigationssystems mit einem externen Stützpunktsystem.

2. Verfahren nach Anspruch 1, dadurch gekennzeichnet, daß von im Gelände, vorwiegend an Straßenkreuzungen und -einmündungen vorgesehenen Stützpunkten (7) Daten über die Lage eines Stützpunktes (7) an ein Fahrzeug gesendet werden, daß die vom Navigationssystem ermittelten Meßdaten und die Stützpunktdaten sowie die in dem Speicher (6) abgespeicherten Daten, zu denen auch Daten über die Lage der Stützpunkte (7) gehören, einem zentralen, programmgesteuerten Auswerteblock (1) zugeführt werden, daß in dem Auswerteblock (1) unter Zugrundelegung der zugeführten Daten Fahranweisungen für die einzuschlagende Fahrroute ermittelt werden, die der Ausgabeeinrichtung (3) zugeführt werden, und daß die Stützpunktdaten zur Korrektur der vom Navigationssystem zwischenzeitlich ermittelten Ist-Position herangezogen werden.

# BLAUPUNKT-WERKE GMBH 32 HILDESHEIM, Robert-Bosch-Straße 200

PLI Schneider-md/texl      - 2 -      25. Juni 1979
                                                R.Nr. 1623

3. Verfahren nach Anspruch 2, dadurch gekennzeichnet, daß von einem Stützpunkt (7) Stützpunktdaten elektronisch übermittelt werden.

4. Verfahren nach Anspruch 2, gekennzeichnet durch eine ortsselektive Datenübertragung von einem Stützpunkt (7) in ein Fahrzeug.

5. Verfahren nach Anspruch 1, dadurch gekennzeichnet, daß bei einem Abweichen von einer vom Fahrzeuggerät ermittelten und angezeigten Fahrroute spätestens am nächsten Entscheidungspunkt eine andere Fahrroute ermittelt und angezeigt wird.

6. Verfahren nach Anspruch 1, dadurch gekennzeichnet, daß die Position des Fahrzeugs laufend angezeigt wird und/oder daß die durchfahrenen Stützpunkte (7) laufend angezeigt werden.

7. Verfahren nach Anspruch 1, dadurch gekennzeichnet, daß Daten über die Verkehrslage von einer Zentrale über die Stützpunkte (7) an vorbeifahrende Fahrzeuge gesendet werden.

8. Verfahren nach Anspruch 1, dadurch gekennzeichnet, daß im Speicher (6) die Kategorie und/oder die zulässige Fahrrichtung von Straßen abgespeichert wird.

**BLAUPUNKT-WERKE GMBH** 32 HILDESHEIM, Robert-Bosch-Straße 200

9.  Vorrichtung zur Zielführung von Landfahrzeugen, insbesondere zur Anwendung in stark vermaschten Stadtstraßennetzen, die ein Fahrzeuggerät mit einer Eingabeeinrichtung
    für einen Zielwunsch und einer Ausgabeeinheit für Fahranweisungen enthält, dadurch gekennzeichnet, daß das
    Fahrzeuggerät einen zentralen, programmgesteuerten Auswerteblock (1) aufweist, daß der Auswerteblock (1) über
    Datenleitungen mit einem Geber (4) für Bewegungsdaten,
    einem Speicher (6), der Zieleingabeeinrichtung (2) und der
    Ausgabeeinrichtung (3) für Fahranweisungen verbunden ist,
    daß im Speicher (6) die Lage der Anfangs- und Endpunkte
    der zulässigen Fahrrouten sowie jeweils ein Verbindungsweg zwischen einem Anfangs- und einem Endpunkt abgespeichert
    sind, daß im Auswerteblock (1) ein Navigationssystem und
    ein Rechner enthalten sind, von denen unter Berücksichtigung
    der empfangenen Bewegungsdaten und der abgespeicherten
    Geländeplandaten Fahranweisungen ermittelt, an die Ausgabeeinrichtung (3) geleitet und vor jedem Entscheidungspunkt
    angezeigt werden.

10. Vorrichtung nach Anspruch 9, dadurch gekennzeichnet, daß
    einzelne Entscheidungspunkte Stützpunkte (7) aufweisen,
    die Daten über ihre Lage an ein Fahrzeug senden, daß das
    Fahrzeug einen zugehörigen Empfänger (5) aufweist, der mit
    dem Auswerteteil (1) verbunden ist, und daß im Speicher (6)
    die Daten über die Lage der Stützpunkte (7) abspeicherbar
    sind.

11. Vorrichtung nach Anspruch 10, dadurch gekennzeichnet, daß
    der Sender eines Stützpunktes (7) über einen Signalweg
    mit einer Sendezentrale verbunden ist.

0020939

# BLAUPUNKT-WERKE GMBH 32 HILDESHEIM, Robert-Bosch-Straße 200

PLI Schneider-md/texl          - 4 -          25. Juni 1979
                                              R.Nr. 1623

12. Vorrichtung nach Anspruch 9, dadurch gekennzeichnet, daß
    an einem separaten Ausgang (8) dem zentralen, programmgesteuerten Auswerteblock (1) eine Information über die
    augenblickliche Position des Fahrzeugs entnehmbar ist, die
    der Sendeanlage (9) eines Sonderfahrzeugs zuführbar ist.

13. Vorrichtung nach Anspruch 10, gekennzeichnet durch orts-
    selektiv sendende Stützpunkte (7).

BLAUPUNKT-WERKE GMBH 32 HILDESHEIM, Robert-Bosch-Straße 200

Europäisches
Patentamt

**EUROPÄISCHER RECHERCHENBERICHT**

0020939

Nummer der Anmeldung

EP 80 10 2306

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 845 289 (R.L. FRENCH) <br> * Spalte 5, Zeile 56 - Spalte 8, Zeile 59 * <br><br> -- | 1,5,6, 9 |
| | US - A - 3 961 166 (C.R. STOBART) <br> * Spalte 2, Zeile 22-62 * <br><br> -- | 1-4, 9,10 12,13 |
| | DE - A - 2 426 570 (L. COLLINS) <br> * Seiten 2,3 * <br><br> -- | 1,9 |
| | US - A - 4 139 889 (G.W. INGELS) <br> * Spalte 2, Zeile 25 - Spalte 3, Zeile 8 * <br><br> -- | 1,6,9, 10,12 |
| | US - A - 3 786 422 (S. LUBKIN) <br> * Spalte 12, Zeilen 35-61 * <br><br> -- | 1,9 |
| P | EP - A - 0 011 880 (GEBRE, ADMASU) <br> * Seite 2, Zeile 9 - Seite 3, Zeile 10 * <br><br> -- | 1,9 |
| P | GB - A - 2 013 890 (NISSAN) <br> * Seite 5, Zeilen 90-122 * <br><br> -- | 1,9 |
| E | FR - A - 2 412 882 (BLAUPUNKT) <br> * Seite 9, Zeilen 1-29 * <br> & DE - A - 2 757 935 <br> -- ./. | 1,7,9 |

**KLASSIFIKATION DER ANMELDUNG (Int.Cl. 3)**

G 01 C 21/14
G 05 F 15/50

**RECHERCHIERTE SACHGEBIETE (Int. Cl. 3)**

G 01 C 21/04
        21/10
        21/12
        21/14
        21/22
        22/02
G 06 F 15/50
G 05 D  1/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-10-1980 | DE BUYZER |

EPA form 1503.1 06.78

Europäisches
Patentamt

**EUROPÄISCHER RECHERCHENBERICHT**

0020939

Nummer der Anmeldung

EP 80 10 2306

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| A | DE - A - 2 314 075 (GENERAL SIGNAL) <br> * Seite 18, Zeile 1 - Seite 19, Zeile 4 * <br><br> ---- | 1,9 | |
| | | | **RECHERCHIERTE SACHGEBIETE (Int. Cl.³)** |